# EUROPÄISCHE PATENTSCHRIFT

(11) **EP 0 431 454 B1**
(45) Veröffentlichungstag und Bekanntmachung des Hinweises auf die Patenterteilung: **03.11.1993**
(21) Anmeldenummer: 90122711.6
(22) Anmeldetag: 28.11.1990
(51) Int. Cl.: A47J 41/02, A47G 19/12, A47G 23/04

(54) **Warmhaltekanne**
Heat-insulated vessel
Récipient calorifugé

(30) Priorität: 07.12.1989 DE 3940507
(43) Veröffentlichungstag der Anmeldung: 12.06.1991
(73) Patentinhaber: Braun Aktiengesellschaft, Frankfurt am Main (DE)
(72) Erfinder: Möthrath, Georg, W-6460 Gelnhausen (DE); Löhr, Peter, W-6052 Mühlheim 50 (DE)

(56) Entgegenhaltungen:
- DE-A- 2 824 653
- DE-A- 3 434 331
- DE-B- 2 658 295
- DE-U- 7 627 504
- GB-A- 2 088 040
- US-A- 4 685 588

## Beschreibung

Die Erfindung betrifft eine Warmhaltekanne nach dem Oberbegriff des Patentanspruchs 1.

Eine derartige Warmhaltekanne ist aus der DE-OS 34 34 331 bekannt. Die dort beschriebene Warmhaltekanne ist sowohl dafür geeignet, auf der Warmhalteplatte einer heute weit verbreiteten Brühgetränkemaschine abgestellt zu werden, wie sie beispielsweise aus dem DE-U 78 09 444 bekannt ist, als auch dafür geeignet, von der Warmhalteplatte entfernt und auf einer ebenen Unterlage abgestellt zu werden. Bei aufgesetztem Deckel - aber nicht mehr auf der Warmhalteplatte stehend - bietet diese Warmhaltekanne den Vorteil, daß ein in ihrem Inneren sich befindliches heißes Getränk zum einen durch ein zwischen der Außenseite ihres Bodens, einer bis zur Unterlage reichende Ummantelung ihrer Seitenwände und der betreffenden Unterlage selbst vorhandenes Luftpolster und zum anderen durch die Wärmeisolation ihrer Seitenwände länger warm bleibt als beispielsweise in einer Warmhaltekanne, wie sie aus der DE-OS 28 24 653 bekannt ist. Bei letzterer berührt nämlich die Außenseite ihres metallischen Bodens direkt die entsprechende Unterlage, wodurch relativ hohe Verluste durch Wärmeleitung auftreten.

Die aus der DE-OS 34 34 331 bekannte Warmhaltekanne weist aber den Nachteil auf, daß an der Außenseite des aus Glas bestehenden Bodens nach wie vor eine erhebliche Wärmemenge durch Wärmestrahlung verloren geht. Hauptursache dafür ist der relativ hohe spektrale Emissionskoeffizient von Glas, der bei den hier vorherrschenden Temperaturen bei etwa 95% liegt. Allein die durch Wärmestrahlung bedingten Wärmeverluste führen dazu, daß ein in der Warmhaltekanne sich befindliches heißes Getränk mit einer Temperatur von etwa 75°C sich bei einer Füllung von zwei Tassen innerhalb einer Stunde um etwa 10°C abkühlen würde.

Aus der GB 2 088 040 A ist eine durchgehend doppelwandig ausgebildete Thermoskanne bekannt, deren beide Wände aus Edelstahl bestehen und bei der der durch die beiden Wände gebildete Zwischenraum weitgehend evakuiert ist. Dabei weist sowohl die Außenseite der inneren als auch die Innenseite der äußeren der beiden Wände einen aus mehreren Schichten zusammengesetzten Uberzug auf, der im wesentlichen zwei Aufgaben hat. Zum einen soll die erste, nicht hochglänzende, beispielsweise aus Nickel bestehende Schicht den Austritt von Gasen aus den beiden Wänden in den evakuierten Zwischenraum unterbinden. Zum anderen soll eine darüberliegende hochglänzende, beispielsweise wiederum aus Nickel bestehende Schicht durch Wärmestrahlung verursachte Wärmeverluste des in der Themoskanne aufbewahrten Getränks soweit wie möglich unterdrücken. Die bekannte Thermoskanne weist den Nachteil auf, daß aufgrund ihrer nahezu perfekten Wärmeisolation, und zwar sowohl in Bezug auf Wärmeleitung (evakuierter Zwischenraum) als auch Wärmestrahlung (zweite Schicht des Uberzugs auf den einander gegenüberliegenden Wänden) fast keine Wärme von der Warmhalteplatte in das Brühgetränk transportiert werden kann. Umgekehrt ist damit auch die Wärmeentwicklung der Warmhalteplatte von Brühgetränkemaschinen in Relation zu den vergleichsweise niedrigen Wärmeverlusten im allgemeinen viel zu hoch, was zu lokalen Uberhitzungen im Bodenbereich der Thermoskanne führen kann. Andererseits können aus denselben Gründen nach Einschalten der Brühgetränkemaschine und der damit verbundenen Erwärmung der Warmhalteplatte die Wände der Thermoskanne nicht vorgeheizt werden, so daß bei der Zubereitung kleiner Mengen eines Brühgetränks letzteres durch die Aufheizung der Innenwand der Thermoskanne eine deutliche Abkühlung erfährt, bevor es durch die Wirkung der Thermoskanne für längere Zeit warmgehalten wird. Schließlich weist die bekannte Thermoskanne den Nachteil auf, daß deren Benutzer nach Herstellung eines Brühgetränks diese an ihrem oberen Ende manuell durch einen Stopfen oder dergleichen verschließen muß.

Es war daher Aufgabe der Erfindung, eine Warmhaltekanne nach dem Oberbegriff des Patentanspruchs 1 derart zu verbessern, daß ein in ihr sich befindliches heißes Getränk sich durch Wärmeverluste noch weniger abkühlt als in der aus der DE-OS 34 34 331 bekannten Warmhaltekanne.

Diese Aufgabe wird für eine Warmhaltekannte nach dem Oberbegriff des Patentanspruchs 1 durch die in dessen kennzeichnendem Teil enthaltenen Merkmale gelöst.

Dadurch, daß die Außenseite des Bodens der Warmhaltekanne mit einer Abdeckung aus einem gut wärmeleitenden Material versehen ist, welches bei den hier Interessierenden Temperaturen einen niedrigen spektralen Emissionskoeffizienten aufweist, wird erreicht, daß bei auf der Warmhalteplatte aufgesetzter Warmhaltekanne leicht Wärme in die Warmhaltekanne und damit in das sich darin befindliche heiße Getränk fließen kann. Es werden aber zum einen durch das sich zwischen der Unterlage, der Außenseite des Bodens und der sich über die Außenseite des Bodens hinaus erstreckende Ummantelung sich bildende Luftpolster Wärmeverluste durch Wärmeleitung deutlich vermindert und zum anderen durch die Abdeckung auch noch die durch Wärmestrahlung bedingten Wärmeverluste erheblich reduziert.

Damit ist es auf einfachste Weise möglich, fast eine Art "thermischer Einbahnstraße" zu schaffen, bei der zwar relativ leicht Wärme von der Warmhalteplatte in das heiße Getränk transportiert werden kann, bei der aber nur sehr wenig Wärme bei nicht auf der Warmhalteplatte, sondern auf einer nicht beheizten Unterlage stehender Warmhaltekanne aus dem heißen Getränk abfließen kann.

Eine vorteilhafte Weiterbildung der Erfindung (Anspruch 2) besteht darin, als Material für die Abdeckung ein leicht an die Form des Bodens der Warmhaltekanne anpassbares Material auszuwählen, wofür sich Metalle anbieten, die darüber hinaus grundsätzlich auch ein hohes Wärmeleitvermögen und innerhalb des hier interessierenden Temperaturbereichs auch ein niedriges spektrales Emissionsvermögen aufweisen.

Wählt man gemäß Anspruch 3 eine Abdeckung aus Stahl, die auf ihrer gesamten Oberfläche mit Nickel beschichtet ist, so erhält man einerseits eine Abdeckung mit einer hohen Wärmeleitfähigkeit und andererseits eine Abdeckung, deren spektrales Emissionsvermögen besonders niedrig ausfällt.

Die durch den Patentanspruch 4 definierte Ausführungsform der Erfindung ist insofern vorteilhaft, als es genügt, einen ringförmigen Bereich des Bodens mit einer guten Wärmeleitfähigkeit auszustatten, da bei gattungsgemäßen Brühgetränkemaschinen der unter der Warmhalteplatte angeordnete Durchlauferhitzer meist hufeisenförmig ausgebildet ist und damit auf der Warmhalteplatte eine ringförmige Zone besonders intensiver Wärmeabgabe erzeugt wird.

Die Wärmeverluste durch Wärmeleitung in Richtung der Seitenwände der Warmhaltekanne fallen dann besonders niedrig aus, wenn diese gemäß Anspruch 5 nach dem Vorbild der bekannten, nicht auf eine Warmhalteplatte aufsetzbaren Thermoskannen zum einen doppelwandig ausgebildet sind und zum anderen der dabei entstehende Zwischenraum weitgehend evakuiert und gasdicht verschlossen ist.

In diesem Zusammenhang ist zu berücksichtigen, daß beim Beheizen der Warmhaltekanne durch die Warmhalteplatte ausgehend vom Boden der Warmhalteplatte längs der äußeren Wand der doppelwandig ausgeführten Seitenwände ein merklicher Wärmetransport auftritt, so daß die gesamte äußere Wand eine Temperatur oberhalb Raumtemperatur annimmt. Dadurch werden durch Wärmestrahlung und Wärmeleitung bedingte Wärmeverluste weiter vermindert.

Verspiegelt man gemäß Anspruch 6 die doppelwandig ausgeführten Seitenwände auf ihren einander zugewandten Flächen mit einem Material, welches im Temperaturbereich des heißen Getränks ein niedriges spektrales Emissionsvermögens aufweist, fällt die über die Seitenwände austretende Wärmestrahlung besonders gering aus.

Evakuiert man gemäß Anspruch 7 den Zwischenraum der doppelwandig ausgeführten Seitenwände bis auf einen Druck von etwa 10⁻³ millibar, ergibt sich für die mittlere freie Weglänge der Moleküle der Luft ein derart großer Wert, daß die Wahrscheinlichkeit des Zusammentreffens von Luftmolekülen so gering ist, daß die Wärmeleitung in Richtung auf die äußere Wand der doppelwandig ausgeführten Seitenwände der Warmhaltekanne praktisch vernachlässigbar ist.

Anspruch 8 stellt insofern eine vorteilhafte Weiterbildung der Erfindung dar, als es nicht nötig ist, auf der gesamten Fläche des Bodens der Warmhaltekanne für eine gute Wärmeleitung zu sorgen, da es genügt, wenn die Warmhaltekanne nur mit einem Teil ihrer Bodenfläche in gutem Wärmekontakt mit der Abdeckung steht. Durch diese Maßnahme werden daher die Verluste durch Wärmeleitung und Wärmestrahlung dann, wenn die Warmhaltekanne auf einer nicht beheizten Unterlage abgestellt wird, noch weiter vermindert.

Im folgenden wird ein Ausführungsbeispiel der Erfindung anhand der Zeichnung näher beschrieben. Es zeigen:
- Fig. 1: die teilweise Darstellung eines Schnitts durch eine auf der Warmhalteplatte einer Brühgetränkemaschine stehende Warmhaltekanne;
- Fig. 2: einen ebenfalls nur teilweise dargestellten Schnitt durch dieselbe, von der Warmhalteplatte aber abgehobene und auf einer nicht beheizten, ebenen Unterlage abgestellten Warmhaltekanne.

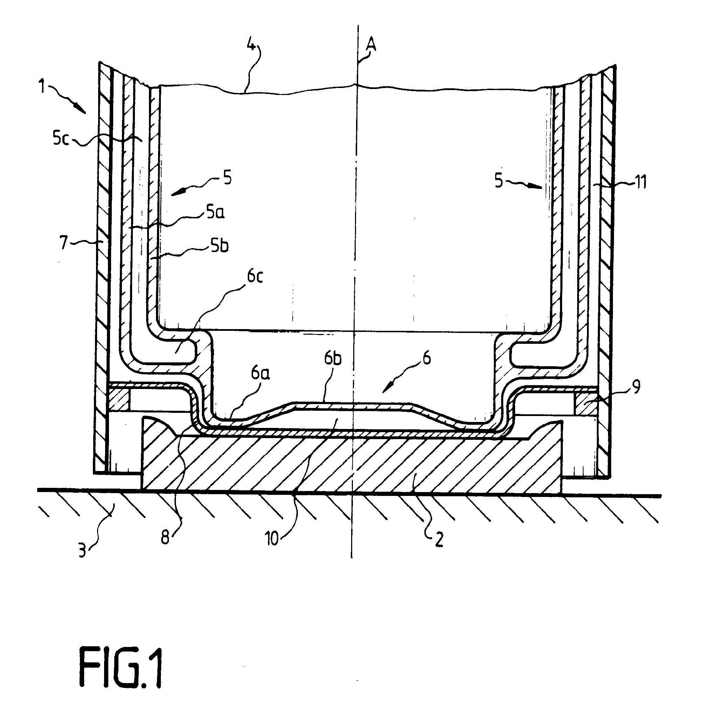

Gemäß Fig. 1 steht eine insgesamt mit dem Bezugszeichen 1 versehene Warmhaltekanne auf der Warmhalteplatte 2 einer mit Ausnahme von Teilen des die Warmhalteplatte 2 tragenden Sockels 3 nicht dargestellten Brühgetränkemaschine. Bei der Brühgetränkemaschine kann es sich um eine Kaffee- oder Teemaschine handeln, bei der die Zubereitung des entsprechenden heißen Getränks dadurch erfolgt, daß Wasser aus einem Vorratstank in einen an der Unterseite der Warmhalteplatte 2 angebrachten elektrischen Durchlauferhitzer gelangt, dort erhitzt und durch Dampfdruck über ein Steigrohr einer Aufbrüheinheit zugeführt wird, von der das aufgebrühte heiße Getränk dann schließlich in die Warmhaltekanne 1 fließt. Die Warmhalteplatte 2 wird bei einer derartigen Brühgetränkemaschine nach Beendigung des Aufbrühvorgangs vom elektrischen Durchlauferhitzer - zumeist temperaturgeregelt - weiter beheizt, um das aufgebrühte heiße Getränk länger warmzuhalten.

Die erfindungsgemäße Warmhaltekanne 1 besteht aus einem kreiszylindrischen Glaskörper 4 (Achse A) mit Seitenwänden 5, die doppelwandig ausgebildet sind. Die entsprechenden Glaswände 5a und 5b bilden in der von herkömmlichen, nicht in Verbindung mit Warmhalteplatten verwendeten Thermoskannen bekannten Weise einen luftdicht verschlossenen Zwischenraum 5c, der weitgehend evakuiert ist. Der Restdruck in dem überwiegend von den Seitenwänden 5a und 5b gebildeten Zwischenraum 5c beträgt etwa 10⁻³millibar. Darüber hinaus sind die beiden Seitenwände 5a und 5b auf ihren einander zugewandten Innenflächen mit einer in der Zeichnung nicht dargestellten Schicht überzogen, die in dem hier interessierenden Temperaturbereich des heißen Getränks von etwa 50°-90° Celsius ein niedriges Emissionsvermögen aufweist. Die Seitenwände 5a und 5b wirken daher bei den genannten Temperaturen weitgehend als Spiegel für die entsprechende Infrarotstrahlung.

Wie aus der Zeichnung ersichtlich, erstreckt sich der durch die Seitenwände 5a und 5b gebildete Zwischenraum 5c auch noch teilweise in den Bereich des Bodens 6 der Warmhaltekanne, so daß auch der Boden 6 außen einen doppelwandig ausgebildeten Bereich 6c aufweist, der aber mit der Warmhalteplatte 2 nicht in Wärmekontakt steht.

In seinem achsnäheren Bereich verläuft der Boden 6 in einem ringförmigen Bereich 6a zunächst in etwa parallel zur Oberfläche der Warmhalteplatte 2 und steht mit dieser über eine im folgenden näher beschriebene Abdeckung 8 in gutem Wärmekontakt. Die äußeren Seitenwände 5a der Warmhaltekanne 1 werden von einer aus Kunststoff bestehenden Ummantelung 7 umgeben, in die der Glaskörper 4 von unten soweit eingeschoben wird, bis er gegen einen nicht dargestellten Anschlag im oberen Bereich der Ummantelung 7 anliegt. Zwischen der Ummantelung 7 und der äußeren Seitenwand 5a des Glaskörpers 4 bleibt ein Hohlraum 11, der allerdings nicht evakuiert ist. Zur weiteren Verbesserung der Wärmeisolation kann der Hohlraum 11 mit einem Isoliermaterial, beispielsweise Kunststoffteilchen oder feinporigem Kunststoffschaum, ausgefüllt werden.

In die Ummantelung 7 ist von der Unterseite her die axialsymmetrisch ausgebildete Abdeckung 8 eingesetzt, die mittels einer Befestigungseinrichtung gehalten wird. Gemäß Fig. 1 handelt es sich dabei um einen Ring 9, welcher über ein nicht dargestelltes Gewinde in die Ummantelung 7 eingeschraubt ist. Die Abdeckung 8 gelangt dabei an den ringförmigen Bereich 6a des Bodens 6 zur Anlage. Dadurch, daß der Glaskörper 4 an seiner Oberseite an dem nicht dargestellten Anschlag anliegt, läßt sich die Abdeckung 8 mit Hilfe des Rings 9 so fest gegen den ringförmigen Bereich 6a des Bodens 6 andrücken, daß ein guter Wärmekontakt zwischen diesen beiden Teilen entsteht und daß darüber hinaus auch der Glaskörper 4 stabil und bruchsicher in der Ummantelung 7 gelagert ist.

Die Abdeckung 8 besteht aus einem Stahlblech, das auf seiner gesamten Oberfläche mit Nickel beschichtet ist (in der Zeichnung nicht dargestellt). Dadurch wird erreicht, daß die Abdeckung 8 zum einen - da sie aus Metall besteht - gut wärmeleitend ist und zum anderen - da sie mit Nickel beschichtet ist - in dem hier interessierenden Temperaturbereich für die entsprechende Infrarotstrahlung ein niedriges Emissionsvermögen aufweist.

Zwischen der Abdeckung 8 und dem Boden 6 entsteht dadurch, daß letzterer in seinem um die Achse A gelegenen Mittenbereich 6b höher verläuft als in seinem ringförmigen Bereich 6a, und dadurch, daß die Abdeckung 8 den Boden 6 längs seines ringförmigen Bereichs 6a voll umschließt, ein Luftkissen 10. Das Luftkissen 10 beeinträchtigt den durch Wärmeleitung verursachten Wärmeübergang von der Warmhalteplatte 2 zum Boden 6 des Glaskörpers 4 nur unwesentlich, da die geometrische Form des nicht dargestellten, in der Warmhalteplatte 2 angeordneten Durchlauferhitzers weitgehend dem ringförmigen Bereich 6a des Bodens 6 entspricht. Längs des ringförmigen Bereichs 6a ist somit der Wärmeübergang zwischen Warmhalteplatte 2 und Glaskörper 4 sehr gut, da die Abdeckung 8 in gutem Wärmekontakt mit dem ringförmigen Bereich 6a steht.

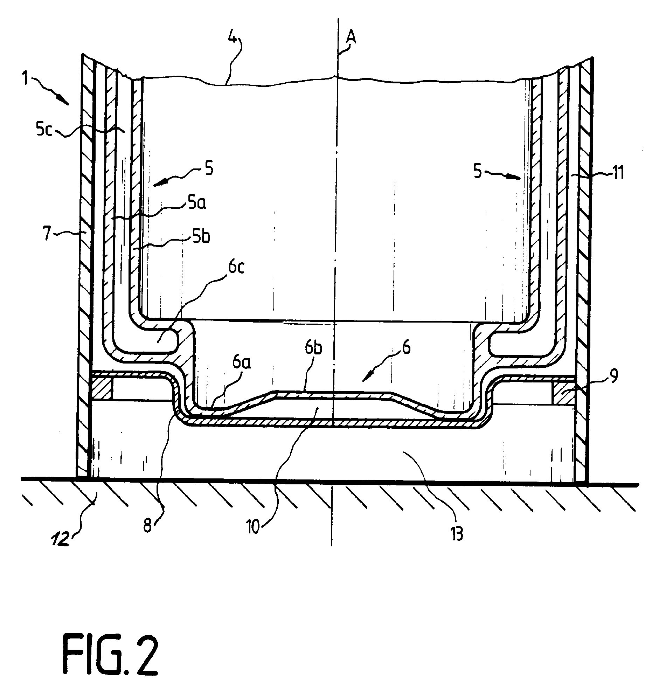

Aus Fig. 2 ist ersichtlich, daß dann, wenn die Warmhaltekanne 1 von der Warmhalteplatte 2 abgehoben wurde und auf einer Unterlage 12 abgestellt wird, sich dadurch, daß sich die Ummantelung 7 über die Abdeckung 8 hinaus nach unten erstreckt, zwischen der Unterlage 12 und der Abdeckung 8 ein Luftpolster 13 entsteht.

Auf diese Weise ist für den Fall, daß die Warmhaltekanne 1 - wenn sie nicht mehr auf der Warmhalteplatte 2 steht und das Brühgetränk von dieser warmgehalten wird - in mehrfacher Weise gegen Wärmeverluste gesichert. Auf die doppelwandig ausgebildete Seitenwand 5 und dem dadurch entstehenden evakuierten Zwischenraum 5C werden in bekannter Weise sowohl Wärmeverluste durch Wärmeleitung, Konvektion und vor allem auch durch Wärmestrahlung minimiert. Durch die Existenz des luftgefüllten oder mit isolierendem Material aufgefüllten Hohlraums 11 wird über die Seitenwände 5 immer noch austretende Wärme nur langsam zur Ummantelung 7 abgeführt.

Der maßgebliche Effekt besteht jedoch darin, daß durch das Luftpolster l3 Wärmeverluste durch Wärmeleitung und Konvektion stark vermindert werden und daß im Bodenbereich der Warmhaltekanne 1 durch die erfindungsgemäße Abdeckung 8 auch die durch Wärmestrahlung bedingte Wärmeverluste stark eingeschränkt werden.

Dessen ungeachtet besteht bei der Herstellung des heißen Getränks über den ringförmigen Bereich 6a des Bodens 6 und die Abdeckung 8 eine gute Wärmeleitung zwischen dem Boden 6 der Warmhaltekanne 1 und der Warmhalteplatte 2 der Brühgetränkemaschine, so daß beim Brühvorgang die Warmhaltekanne 1 von der Warmhalteplatte 2 vor- und weiterbeheizt wird, wordurch das heiße Getränk in eine bereits vorbeheizte Warmhaltekanne 1 einfließt.

Nach Beendigung des Brühvorgangs kann die erfindungsgemäße Warmhaltekanne 1 daher von der Warmhalteplatte 2 abgehoben werden, ohne daß sich das in ihr befindliche heiße Getränk nennenswert abkühlt. Dadurch wird erreicht, daß das heiße Getränk über eine lange Zeit warmgehalten wird, ohne daß es dazu einer immer wieder vorzunehmenden, aromaschädigenden Aufheizung bedarf.

## Patentansprüche

1. Warmhaltekanne (1) für ein in einer Brühgetränkemaschine mit Warmhalteplatte (2) erzeugtes heißes Getränk mit einem Deckel und mit einem Boden (6) und Seitenwänden (5), die beide aus Glas bestehen, wobei die Warmhaltekanne (1) im wesentlichen über den gesamten Verlauf ihrer Seitenwände (5) isolierend ausgebildet ist und wobei die Seitenwände (5) mit einer Ummantelung (7) versehen sind, die sich derart über den Boden (6) hinaus erstreckt, daß sich beim Abstellen der Warmhaltekanne (1) auf einer ebenen Unterlage (12) zwischen der Unterlage (12) und der Außenseite des Bodens (6) ein Luftpolster bildet,
**dadurch gekennzeichnet**,
daß die der Unterlage (12) zugewandte Seite des Bodens (6) mit einer Abdeckung (8) aus einem gut wärmeleitenden Material versehen ist, dessen spektrales Emissionsvermögen im Temperaturbereich des heißen Getränks wesentlich kleiner als das von Glas ist, und daß die Abdeckung (8) in gutem Wärmekontakt mit dem Boden (6) steht.

2. Warmhaltekanne nach Anspruch 1,
**dadurch gekennzeichnet,**
daß die Abdeckung (8) aus Metall besteht.

3. Warmhaltekanne nach Anspruch 2,
**dadurch gekennzeichnet,**
daß die Abdeckung (8) aus einem Kern aus Stahl besteht, der auf seiner Oberfläche mit Nickel beschichtet ist.

4. Warmhaltekanne nach Anspruch 1,
**dadurch gekennzeichnet,**
daß der Boden (6) in seinem Mittenbereich (6b) nach innen gewölbt ist, wodurch zwischen der Abdeckung (8) und dem Mittenbereich (6b) des Bodens (6) ein wärmeisolierendes Luftkissen (10) entsteht.

5. Warmhaltekanne nach Anspruch 1,
**dadurch gekennzeichnet,**
daß die Wärmeisolierung der Seitenwände (5) der Warmhaltekanne (1) dadurch erfolgt, daß letztere doppelwandig (5a, 5b) ausgeführt sind und der dadurch entstehende Zwischenraum (5c) weitgehend evakuiert und gasdicht verschlossen ist.

6. Warmhaltekanne nach Anspruch 5,
**dadurch gekennzeichnet,**
daß die doppelwandig (5a, 5b) ausgeführten Seitenwände (5) auf ihren beiden einander zugewandten Innenflächen mit einem Material überzogen sind, das im Temperaturbereich des heißen Getränks ein niedriges spektrales Emissionsvermögen aufweist.

7. Warmhaltekanne nach Anspruch 5,
**dadurch gekennzeichnet,**
daß der Zwischenraum (5C) bis zu auf einen Restdruck von etwa 10⁻³ millibar evakuiert ist.

8. Warmhaltekanne nach Anspruch 6,
**dadurch gekennzeichnet,**
daß die doppelwandig (5a, 5b) ausgeführten Seitenwände (5) sich bis in den äußeren Randbereich des Bodens (6) erstrecken, wodurch auch ein doppelwandig ausgeführter Bodenbereich (6C) entsteht.

## Claims

1. A heat-insulated vessel (1) for a hot beverage prepared in a beverage brewer having a keep-warm plate (2), with a lid and with a bottom (6) and side walls (5) made both of glass, with the heat-insulated vessel (1) being constructed in an insulating manner covering essentially the entire extent of its side walls (5), and with the side walls (5) being provided with an outer jacket (7) extending beyond the bottom (6) in such fashion that, when the heat-insulated vessel (1) is placed down on a plane support surface (12), an air pad is formed between the support surface (12) and the outside of the bottom (6),
**characterized in that** the side of the bottom (6) proximate to the support surface (12) is provided with a cover (8) made of a material conducting heat well, its spectral emissivity in the temperature range of the hot beverage being substantially lower than that of glass, and that good thermal contact is maintained between the cover (8) and the bottom (6).

2. The heat-insulated vessel as claimed in claim 1,
**characterized in that** the cover (8) is made of metal.

3. The heat-insulated vessel as claimed in claim 2,
**characterized in that** the cover (8) is comprised of a steel core having a nickel layer deposited on its surface.

4. The heat-insulated vessel as claimed in claim 1,
**characterized in that** the bottom (6) has its center area (6b) inwardly domed, whereby a heat-insulating air cushion (10) is formed between the cover (8) and the center area (6b) of the bottom (6).

5. The heat-insulated vessel as claimed in claim 1,
**characterized in that** the heat in- sulation of the side walls (5) of the heat-insulated vessel (1) is accomplished in that they are of a double-walled construction (5a, 5b) and the resulting intermediate space (5c) is largely evacuated and sealed gas-tight.

6. The heat-insulated vessel as claimed in claim 5,
**characterized in that** the double-walled (5a, 5b) side walls (5) have on their two opposed inner surfaces a deposit made of a material of a low spectral emissivity in the temperature range of the hot beverage.

7. The heat-insulated vessel as claimed in claim 5,
**characterized in that** the intermediate space (5c) is evacuated down to a residual pressure of 10⁻³ mbar, approximately.

8. The heat-insulated vessel as claimed in claim 6,
**characterized in that** the double-walled (5a, 5b) side walls (5) extend up into the outer rim area of the bottom (6), thereby producing an equally double-walled bottom area (6c).

## Revendications

1. Récipient calorifugé (1) pour une boisson chaude produite dans un distributeur de boissons infusées avec plaque de maintien au chaud (2), comportant un couvercle et un fond (6) et des parois latérales (5) qui sont l'un et l'autre constitués de verre, le récipient calorifugé (1) étant conçu isolant sensiblement sur toute la longueur de ses parois latérales (5) et les parois latérales (5) étant munies d'une enveloppe (7) qui s'étend au-delà du fond (6) de façon que, lorsque l'on pose le récipient calorifugé (1) sur un support plan (12), il se forme un matelas d'air entre le support (12) et la face extérieure du fond (6),
récipient caractérisé
par le fait que la face du fond (6) orientée vers le support (12) est munie d'un recouvrement (8) en matériau bon conducteur de la chaleur dont le pouvoir d'émission spectrale, sur la plage de température de la boisson chaude, est sensiblement inférieur à celui du verre, et par le fait que le recouvrement (8) se trouve en bon contact thermique avec le fond (6).

2. Récipient calorifugé selon la revendication 1,
caractérisé
par le fait que le recouvrement (8) est en métal.

3. Récipient calorifugé selon la revendication 2,
caractérisé par le fait que le recouvrement (8) est constitué d'un noyau d'acier qui est recouvert de nickel sur sa surface.

4. Récipient calorifugé selon la revendication 1,
caractérisé
par le fait que le fond (6) est bombé vers l'interieur dans sa zone médiane (6b), ce par quoi un coussin d'air thermiquement isolant (10) apparait entre le recouvrement (8) et la zone médiane (6b) du fond (6).

5. Récipient calorifugé selon la revendication 1,
caractérisé
par le fait que l'isolation thermique des parois latérales (5) du récipient calorifugé (1) se fait par le moyen que ces dernières sont réalisées à double paroi (5a, 5b) et que l'espace intermédiaire (5c) qui apparait de ce fait est largement mis sous vide et obturé de façon étanche au gaz.

6. Récipient calorifugé selon la revendication 1,
caractérisé
par le fait que, sur leurs deux surfaces intérieures orientées l'une vers l'autre, les parois latérales (5), réalisées à double paroi (5a, 5b) sont revêtues d'un matériau qui, sur la plage de température de la boisson chaude, présente un faible pouvoir d'émission spectrale.

7. Récipient calorifugé selon la revendication 5,
caractérisé
par le fait que l'espace intermédiaire (5c) est mis sous vide jusqu'à une pression résiduelle d'environ 10⁻³ millibar .

8. Récipient calorifugé selon la revendication 6,
caractérisé
par le fait que les parois latérales (5), réalisées à double paroi (5a, 5b,) s'étendent jusque dans la zone de bordure extérieure du fond (6), ce par quoi apparait également une zone de fond (6) réalisée à double paroi.
